# EUROPEAN PATENT APPLICATION

(11) **EP 2 500 705 A1**
(43) Date of publication of application: **19.09.2012**
(21) Application number: 11158207.8
(22) Date of filing: 15.03.2011
(51) Int. Cl.: G01L 23/08, G01L 23/30, G01M 15/06, G01M 15/08

(54) **Method for the determination of the pressure in the combustion chamber of a large diesel engine and large diesel engine**

(71) Applicant: Wärtsilä Schweiz AG, 8401 Winterthur (CH)
(72) Inventor: Sudwoj, Gregory, 8482 Sennhof/Winterthur (CH)
(74) Representative: Sulzer Management AG

(57) **Abstract**

A method is proposed for the determination of the pressure in a combustion chamber (8) of a large diesel engine having at least one cylinder (2) in which a piston (3) delimiting the combustion chamber (8) can be moved back and forth and which is connected by means of a piston rod (4) to a crosshead (5) being movable in a crosshead guide which in turn is connected to a crankshaft (7) by means of a connecting rod (6). The acceleration of the crosshead (5) is measured by means of a sensor device (9) and said acceleration is used for the determination of the pressure in the combustion chamber (8). In addition, a large diesel engine is proposed.

## Description

The invention relates to a method for the determination of the pressure in the combustion chamber of a large diesel engine as well as to a large diesel engine in accordance with the preamble of the independent claim of the respective category.

Large diesel engines, which can be designed as two-stroke engines or as four-stroke engines, are frequently used as propulsion units for ships or also in stationary operation, e.g. to drive large generators for the generation of electric energy. In the engines of the crosshead type the reciprocating movement of the piston, which is moved back and forth in a cylinder, is transferred by means of a piston rod to a crosshead, which is itself connected to the crankshaft by means of a connecting rod. In the operating state the piston slides along the inner wall of the cylinder, which is most frequently designed in the form of a cylinder sleeve.

One of the most essential parameters is the pressure in the combustion chamber. This parameter allows to determine for example the power developed by the particualar cylinder, the balance between the different cylinders, the heat release factor in the cylinder, mechanical stresses of several elements like cylinder liner, piston with piston rings, cylinder cover, related bearings of the crosshead or the connecting rod or the main bearing and so on. In addition, the pressure in the combustion chamber is used for the timing of the injection, the gas exchange and many other control values in the engine.

Usually the pressure in the combustion chamber is measured by means of pressure sensors being located in a wall delimiting the combustion chamber, for example the cylinder cover. Thus, the pressure sensores are exposed to the combustion process which results in a very high thermal, temperature and chemical stress. Periodically changing and very high temperatures, chemically aggressive gases and contacting solid particles are limiting factors for such pressure sensors' lifetime and performance.

Starting from this prior art, it is therefore an object of the invention to propose another method for the determination of the pressure in the combustion chamber of a large diesel engine which is reliable and does not impose such a high stress on the sensor. In addition, the method should be simple, preferably allow for retrofitting and of low complexity with respect to the needed equipment. Furthermore, a large diesel engine shall be proposed in which such a method is implemented.

The subjects of the invention satisfying these objects from the point of view of method and apparatus are characterized by the features of the independent claim of the respective category.

In accordance with the invention a method is proposed for the determination of the pressure in a combustion chamber of a large diesel engine having at least one cylinder in which a piston delimiting the combustion chamber can be moved back and forth and which is connected by means of a piston rod to a crosshead being movable in a crosshead guide which in turn is connected to a crankshaft by means of a connecting rod, wherein the acceleration of the cross head is measured by means of a sensor device and said acceleration is used for the determination of the pressure in the combustion chamber.

By measuring the acceleration of the crosshead in order to determine the pressure in the combustion chamber it is no longer necessary to locate a pressure sensor in the harmful environment of the combustion chamber. Taking into consideration that the acceleration of the crosshead or the piston or the piston rod or generally speaking of each part moving in a linear manner is caused by two forces, namely the force exerted onto the piston by the combustion gas and the force exerted by the rotational and reciprotating movement of the crank mechanism the force induced by the gas may be determined from the accelaration of the crosshead if the force induced by the crank mechanism is known. The latter one is specific for the engine and may be measured or otherwise determined once and saved as a function of the crank angle in a look-up table or any other storage means. Thus, knowing the force executed by the crank mechanism as a function of the crank angle and measuring the acceleration of the crosshead allows for determining the force exerted on the piston during the compression stroke or by the combustion gas and hence the pressure in the combustion chamber without the need of a sensor located in the combustion chamber or a sensor being otherwise in direct contact with the combustion gas. This indirect measurement of the pressure in the combustion chamber is a simple and reliable method necessitating only a few devices. Thus, the complexity from the point of view of equipment as well as the cost a very low.

It is advantageous when the acceleration is being measured, when the piston is near the top dead center. In this part of the periodic piston movement the accelaration caused by the gases is the strongest thus delivering the most reliable results.

According to a preferred embodiment the acceleration is measured in an unidirectional manner. This kind of measurement is sufficient to determine the pressure in the combustion chamber and requests only a less expensive unidirectional accelerometer. Of course it is possible, too, to use a bidirectional accelerometer in order to measure both the upwards and the downwards directed acceleration of the piston which is influenced by both compression and combustion process.

Especially in case the acceleration is measured unidirectionally it is preferred when the accelaration is measured during the downstroke of the piston, i.e. during or shortly after the combustion process.

In a preferred embodiment the sensor device has a measuring part being stationary relative to the crosshead as well as a receiving part being stationary relative to the crosshead guide and a measuring signal is transferred from the measuring part to the receiving part when the measuring part passes the receiving part. This kind of telemetry system allows for a very simple measuring system for the determination of the acceleration. The measuring part moving in common with the piston, the piston rod and the crosshead transfers a measuring signal in a contactless manner when it passes the receiving part. This is a reliable type of measurement with a low fault liability.

It is another preferred measure when energy is supplied to the measuring part, when the measuring part passes the receiving part. Thus, by the relative movement of the receiving and the measuring part with respect to each other the measuring part is provided with energy. This is a simple and easy way to supply the measuring part with the energy that is used for sending the signal to the receiving part. This supply of energy may be achieved by way of electromagnetic induction.

In order to keep the sensor device quite simple but nevertheless reliable it is preferred when the measuring signal is transferred to the receiving part by means of coils.

Furthermore, the invention proposes a large diesel engine having at least one cylinder in which a piston delimiting a combustion chamber can be moved back and forth and which is connected by means of a piston rod to a crosshead being movable in a crosshead guide which in turn is connected to a crankshaft by means of a connecting rod. A sensor device is provided for the determination of the acceleration of the cross head as well as an evaluation device for the determination of the pressure in the combustion chamber by means of the measured acceleration.

This large diesel engine is adapted for performing the method according to the invention as described hereinbefore. By means of the sensor device and the evaluation device it is possible to determine the pressure in the combustion chamber without placing a sensor in that region.

Preferrably the sensor device comprises a measuring part being stationary relative to the crosshead as well as a receiving part being stationary relative to the crosshead guide. This measure renders possible a simple and reliable determination of the acceleration of the crosshead.

From the point of view of construction it is advantageous when the measuring part is fixedly mounted to the crosshead. A preferred location for the measuring part is on the head of one of the screws securing the piston rod to the cross head or fixing the cross head with respect to its bearing. This is a location that is easily accesible.

With respect to the receiving part of the sensor device it is preferred when the receiving part is fixedly mounted to the crosshead guide. This is a location where the passing of the measuring device enables a safe signal transfer.

By the same reasons as already explained with respect to the method the following measures are preferred:
- The measuring part comprises a transmitter for transferring a measuring signal to the receiving part when the measuring part passes the receiving part;
- energy can be supplied to the measuring part, when the measuring part passes the receiving part;
- the receiving part comprises a coil for transferring the measuring signal to the receiving part.

Further advantageous measures and preferred embodiments of the invention result from the dependent claims.

The invention will be explained in more detail in the following with reference to embodiments and to the drawing. There are shown in the schematic drawing, which is not to scale, partly in section:
- Fig. 1:: an illustration of the essential parts of a large diesel engine with a crosshead, and
- Fig. 2:: a schematic illustration of an embodiment of a sensor device.

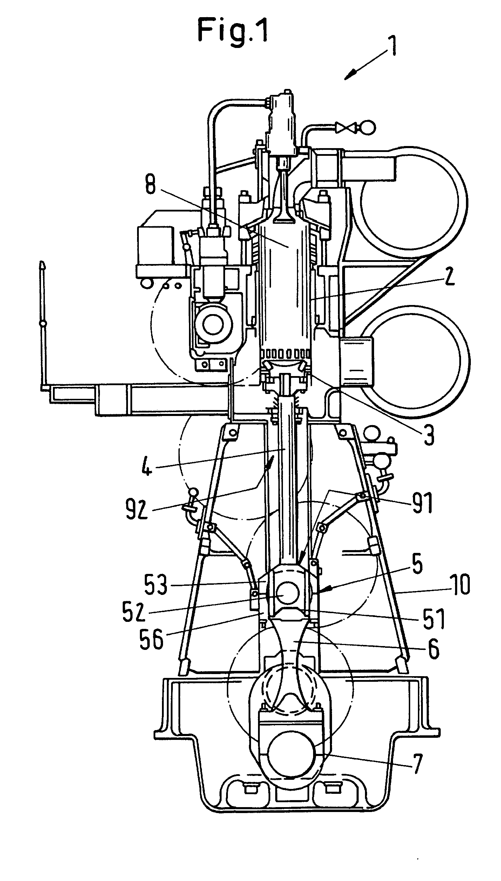

Fig. 1 shows a schematic illustration of the essential parts of a large diesel engine 1 with crosshead 5 which is known per se. In particular Fig. 1 shows parts of a large diesel engine with longitudinal scavenging which operates in accordance with the two stroke principle. Diesel engines 1 of this kind are used for example as propulsion units in shipbuilding. In Fig. 1 one of the cylinders 2, of which a plurality are usually present and which are arranged in a engine housing 10, can be seen. A piston 3 can be moved back and forth in the cylinder 2 and is connected to a crosshead 5 by means of a piston rod 4. The piston 3 delimits a combustion chamber 8 in which the combustion takes place. The crosshead 5 is connected by means of a connecting rod 6 to a crankshaft 7. The crosshead 5 comprises a bearing base 56, which is an integral constituent of the connecting rod 6 and forms one of its ends, a pin 52 on which the one end of the piston rod 4 is fixed and about which the bearing base 56 and thus the connecting rod 6 are pivotal, a bearing cover 53 which together with the bearing base 56 surrounds the pin 52, as well as laterally arranged sliding shoes 51 (only one of which is visible in Fig. 1) with which the crosshead 5 slides up and down — with respect to the illustration of Fig. 1 — in crosshead guides during the operation of the diesel engine 1.

The large diesel engine 1 is preferably an electronically operated and controlled engine. For the operation, the control, the tuning and the diagnosing of the large diesel engine the pressure in the combustion chamber 8 is an essential parameter that has to be determined. Especially the pressure in the combustion chamber 8 has to be known as a function of the crank angle. In accordance with the invention this pressure is determined by measuring the acceleration of the crosshead 5. Of course, the acceleration of the crosshead 5 is the same as the acceleration of the piston 3 or the piston rod 4 or generally speaking of each part moving in a linear manner only. By this method according to the invention all the problems caused by pressure sensors located in or at the combustion chamber 8 are eliminated.

The piston 3, piston rod 4 and crosshead 5 of the two stroke diesel engine 1 are exposed during their reciprocating movement to accelerations originating from gas forces depending on the combustion and compression process in the particular cylinder 2, and forces depending on the rotational and reciprocating movement of the crank mechanism 7, 6. The measured acceleration of the crosshead 2 is a sum of these two effects. The first one (function of gas forces changing within the time or crank angle) can be calculated by deducting the second one (function of the rotation speed within time or crank angle) from what is measured. The value of the piston or crosshead acceleration as a function of the crank angle gives information of the combustion pressure as a function of the crank angle.

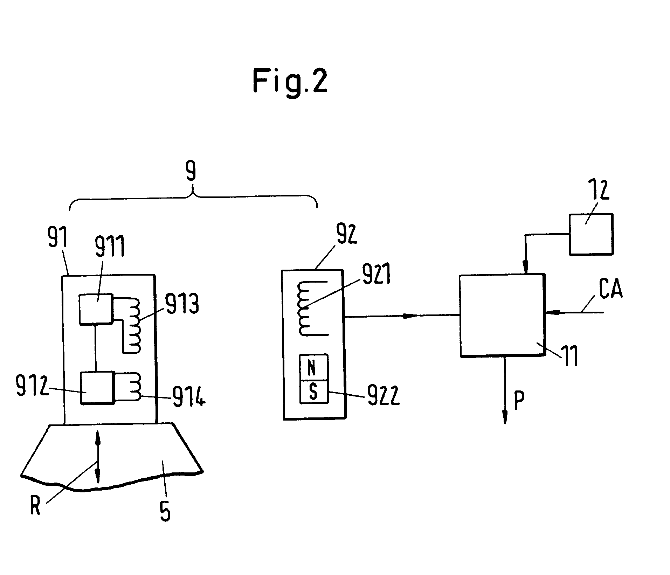

In order to measure the acceleration of the crosshead 5 a sensor device 9 is provided for. Fig. 2 shows a schematic illustration of an embodiment of the sensor device 9. the sensor device 9 comprises a measuring part 91 as well as a receiving part 92. In Fig. 1 only the location of the measuring part 91 and the receiving part 92 is indicated.

The measuring part 91 is stationary relative to the crosshead 5, especially mounted on the crosshead 5. One preferred location for the measuring part 91 is on top or on the head of the screws fixing the bearing cover 53 relative to the bearing base 56 around pin 2. Of course there are other locations possible, it is only necessary that the measuring part 91 is stationary with respect to the crosshead 5, i.e. moves in common with the crosshead 5

The receiving part 92 is arranged stationary with respect to the crosshead guide or -which means the same- stationary with respect to the housing 10 or the A-frame of the engine, respectively. The receiving part 92 comprises a signal antenna 921 for receiving a signal from the measuring part 91 as well as a field source 922 for generating a magnetic field. The field source 922 may be a permanent magnet as indicated by the letters N and S in Fig. 2 or it may be a coil which is energized by a current, for example, a direct current, thus producing an electromagnetic field.

As it is shown in Fig. 2 the measuring part 91 comprises an accelerometer 911, a supply unit 912, a transmitter 913 and a supply antenna 914. The reciprocating movement of the measuring part 91 in common with the crosshead 5 is indicated in Fig. 2 by the double arrow R.

The accelerator 911 is any one of the commercially available sensors for measuring the acceleration. Since these devices are known in the art no further explanation is necessary. The accelerometer 911 may be an unidirectional accelerometer measuring the acceleration in one direction only, i.e. the acceleration either during the downstroke or during the upstroke, or an bidirectional accelerometer that is able to measure the acceleration both during the downstroke and the upstroke of the piston 3. The transmitter 913 transfers the signal measured by the accelerometer 914 by means of a coil functioning as an antenna for sending the signal to the receiving part 92. The supply unit 912 supplies the transmitter 913 with energy to enable the transfer of the signal. In this embodiment the supply unit 912 has a supply antenna 914 embodied as a coil. During its movement the measuring part 91 passes periodically the receiving part 92. This results in an induction voltage which is due to the movement of the supply antenna 914 through the magnetic field generated by the field source 922. The induced voltage may be used for charging a capacitor which in turn supplies energy to the transmitter 913.

The receiving part 92 is connected with an evaluation device 11 for the determination of the pressure in the combustion chamber. Of course, the evaluation device 11 and the receiving part 92 may be integrated in one common device or the evaluation device 11 may be integrated in one of the controll units of the diesel engine 1. The evaluation device 11 is further connected with a storage 12. The storage 12 that may comprise a look-up table contains the information about the force exerted upon the piston by the movement of the crank mechanism 6, 7 as a function of the crank angle. These force values are always the same for a given diesel engine 1 and they depend essentially only on the geometry of the crank mechanism 6, 7. They may be determined once, for example by calculation prior to installation of the device , or when scaling or testing of a new accelerometer is needed or by switching off the specific cylinder 2 (no combustion) and measuring the force or the accelaration of the piston 2. These values are stored in the storage 12 as a function of the crank angle. The actual value of the crank angle is always known during the operation of the diesel engine and is delivered to the evaluation unit 12 as indicated by the arrow CA in Fig. 2. When receiving the measured signal from the receiving part 92 the evaluation unit 11 deducts the force induced by the crank mechanism 6, 7 for the actual crank angle CA and determines the actual value for the pressure in the combustion chamber as indicated by arrow P in Fig. 2.

During operation of the diesel engine 1 the measuring part 91 passes the receiving part 92 during the reciprocating movement of the piston 3. The receiving part defines a measuring field through which the measuring part 91 moves. When passing the measuring or detection field, the transmitter sends the measured signal to the signal antenna 921 of the receiving part 92. In addition, a voltage is induced in the supply antenna 914 when passing through the magnetic field of the field source 922. Usually the accelerometer 911 measures the acceleration continuously. The output of the accelerometer 911 is fed to the transmitter 913 which in turn sends the measured signal. Only when the measuring part 91 passes the receiving part 92 the signal antenna 921 detects the signal emitted by the transmitter 913 and delivers said signal to the evaluation device 12.

Thus, the receiving part 92 has to be located such that it receives the signal of the transmitter 913 during the desired section of the periodically movement of the piston 3. In a preferred embodiment the receiving part 92 is placed such that the measuring part 91 passes the receiving part 92 when the piston 3 is near the top dead center. This location is indicated in Fig. 1. The receiving part 92 is located in or at the crosshead guides in such a position that the transmitter 913 faces the signal antenna 921, when the piston 3 is near the top dead center. This location is preferred because it renders possible the determiantion of the pressure in the combustion chamber 8 during or shortly after the combustion process, i.e. when the acceleration of the piston 3 caused by the gas has its largest value.

In case the accelerometer is a unidirectional one it is preferred to measure the acceleration of the crosshead during the downstroke of the piston 3. However, it is also possible that the measured acceleration during the entire cycle of the engine, that is a 360° change in the crank angle or one complete revolution of the crankshaft 7, is recorded in an internal memory of the measuring part 91 and transmitted once to the receiving part 92 when the transmitter 913 and the signal antenna 921 are passing each other.

As explained the measuring part 91 and the receiving part 92 form a telemetry system for measuring the acceleration of the crosshead 5 and determining therefrom the pressure in the combustion chamber 8. In order to measure the acceleration only in the most interesting section of the piston stroke, where the acceleration is representing essentially the pressure caused by the combustion, the telemetry system is installed only on a certain length of the crosshead guide (rail). If the compression phase of the cycle of the piston movement is not of an interest the sensor device 9 is using an unidirectional accelerometer 911 sensing only the downstroke acceleration of the piston. In case both the compression and expansion strokes of the cycle of the piston movement are to be measured the sensor device has an bidirectional accelerometer 911. Most preferred the power supply and signal transmissions are realized by a system of coils 913, 914, 921, 922 as explained. However other constructions or devices are possible, too.

## Claims

1. Method for the determination of the pressure in a combustion chamber (8) of a large diesel engine having at least one cylinder (2) in which a piston (3) delimiting the combustion chamber (8) can be moved back and forth and which is connected by means of a piston rod (4) to a crosshead (5) being movable in a crosshead guide which in turn is connected to a crankshaft (7) by means of a connecting rod (6), **characterized in that** the acceleration of the crosshead (5) is measured by means of a sensor device (9) and said acceleration is used for the determination of the pressure in the combustion chamber (8).

2. Method in accordance with claim 1 with the acceleration being measured, when the piston (3) is near the top dead center.

3. Method in accordance with one of the preceding claims, wherein the acceleration is measured in an unidirectional manner.

4. Method in accordance with one of the preceding claims wherein the accelaration is measured during the downstroke of the piston (3).

5. Method in accordance with one of the preceding claims, wherein the sensor device (9) has a measuring part (91) being stationary relative to the crosshead (5) as well as a receiving part (92) being stationary relative to the crosshead guide and wherein a measuring signal is transferred from the measuring part (91) to the receiving part (92) when the measuring part passes the receiving part.

6. Method in accordance with one of the preceding claims wherein energy is supplied to the measuring part (91) when the measuring part (91) passes the receiving part (92).

7. Method in accordance with one of the preceding claims wherein the measuring signal is transferred to the receiving part by means of coils.

8. Large diesel engine having at least one cylinder (2) in which a piston (3) delimiting a combustion chamber (8) can be moved back and forth and which is connected by means of a piston rod (4) to a crosshead (5) being movable in a crosshead guide which in turn is connected to a crankshaft (7) by means of a connecting rod (6), **characterized in that** a sensor device (9) is provided for the determination of the acceleration of the crosshead (5) as well as an evaluation device (11) for the determination of the pressure in the combustion chamber (8) by means of the measured acceleration.

9. Large diesel engine in accordance with claim 8 wherein the sensor device (9) comprises a measuring part (91) being stationary relative to the crosshead (5) as well as a receiving part (92) being stationary relative to the crosshead guide.

10. Large diesel engine in accordance with claim 9 wherein the measuring part (91) is fixedly mounted to the crosshead (5).

11. Large diesel engine in accordance with claim 9 or 10 wherein the receiving part (92) is fixedly mounted to the crosshead guide.

12. Large diesel engine in accordance with one of claims 8 to 11 wherein the measuring part (91) comprises a transmitter (913) for transferring a measuring signal to the receiving part (92) when the measuring part (91) passes the receiving part (92).

13. Large diesel engine in accordance with one of claims 8-12 wherein energy can be supplied to the measuring part (91), when the measuring part (91) passes the receiving part (92).

14. Large diesel engine in accordance with one of claims 8-13 wherein the measuring part (91) comprises a coil (913) for transferring the measuring signal to the receiving part (92).
